# EUROPEAN PATENT SPECIFICATION

(11) **EP 2 689 600 B1**
(45) Date of publication and mention of the grant of the patent: **17.06.2015**
(21) Application number: 12717885.3
(22) Date of filing: 21.03.2012
(51) Int. Cl.: H04W 24/00

(54) **A SYSTEM AND METHOD OF MONITORING, MANAGEMENT AND CONTROL OF LICENSING AND PERMITS OF CELLULAR PROVIDERS' NETWORKS**
SYSTEM UND VERFAHREN ZUR ÜBERWACHUNG, VERWALTUNG UND KONTROLLE VON LIZENZEN UND GENEHMIGUNGEN FÜR NETZE VON MOBILFUNKANBIETERN
SYSTÈME ET PROCÉDÉ DE SURVEILLANCE, DE GESTION ET DE CONTRÔLE DE LICENCES ET DE PERMIS SUR DES RÉSEAUX DE FOURNISSEURS DE SERVICES CELLULAIRES

(30) Priority: 22.03.2011 US 201161466038 P
(43) Date of publication of application: 29.01.2014
(73) Proprietor: Wave Guard Technologies Ltd, 44641 Kfar Saba (IL)
(72) Inventor: SHAUL, David, 44539 Kfar Saba (IL); NAVEH, Lior, 45266 Hod Hasharon (IL)
(74) Representative: Becker Kurig Straus
(86) International application number: PCT/IL2012/000122
(87) International publication number: WO 2012/127461

(56) References cited:
- WO-A1-2004/086066
- WO-A2-2011/036664

## Description

### Field of the Invention

The present invention is related to licensing and permits control, granted to networks of mobile service providers. More particularly, the invention relates to continuous software for monitoring, management and control of core and radio wireless telecommunication including all related type of non-ionizing radiation sources under operation.

### Background of the Invention

Licensing and permit control is one of the key elements in every operation of mobile networks. Operational licensing by governmental authority (i.e-usually an official communication authority are pre-requisite to the operation of any type of RF technology based mobile network. In addition, obtaining the proper permits is the first step in the construction of an outdoor cellular base station. Mobile operators wishing to build such an infrastructure installation must apply for a special use building permit. This permit allows a structure to meet the local municipality building criteria and to meet the environmental ordinances of the local municipality. Applications for such a permit are submitted to the municipal planning board and generally require the approval of the town council, or another local board, at a public meeting.

A mobile network provider operating under existing license of operation is subjected to compliance to permit control processes from local as well as national regulators within the country. Furthermore, in recent years, concerns have been raised about a possible link between some types of non-ionizing radiation and cancer. Since cellphones emit non-ionizing Radio Frequency (RF) radiation, mobile network operators are subjected to governmental laws and regulations regarding the level of radiation emitted from their transmitting sources, as well as to local municipalities and districts for building and construction permits.

In a typical mobile radio system, Base Stations (BSs) and mobile User Equipment units (UEs) communicate with voice and data signals via a Radio Access Network (RAN) to one or more core networks. BSs are typically cellular base stations, which consist of transceivers and antennas. The mobile UEs are mobile devices, such as mobile telephones, PDAs, tablets and laptops with mobile termination. The core network is the central part of a telecom network that provides various services to customers who are connected to it.

The RAN covers a geographical area which is divided into cells, each of which is served by a base station. A cell area is a geographical area, in which radio coverage is provided by the radio equipment in the corresponding base station. Each cell is identified by a unique identity, which is broadcasted by the cell. The base station communicates over the air interface (e.g., using radio frequencies) with the mobile UEs within the cell area. In typical RANs, several base stations are typically connected (e.g., by landlines or microwave channels) to a Radio Network Controller (RNC). The RNC (also known as a Base Station Controller) supervises and coordinates various activities of the plurality of base stations connected to it. The RNCs are typically connected to one or more core networks.

The LTE is the Universal Mobile Telecommunications System (UMTS) Long Term Evolution, which is a standard for wireless communication of high-speed data for mobile phones and data terminals. It is based on the GSM/EDGE and UMTS/HSPA network technologies, for increasing the capacity and speed using new modulation techniques. This standard is developed by the 3GPP (3rd Generation Partnership Project). The Universal Mobile Telecommunications System (UMTS) is a third generation mobile communication system, which evolved from the Global System for Mobile Communications (GSM), and is intended to provide improved mobile communication services, based on Wideband Code Division Multiple Access (WCDMA) technology. Code division multiple access-based systems use a wider frequency band to achieve the same rate of transmission as FDMA (Frequency-Division Multiple Access. In a forum known as the Third Generation Partnership Project (3GPP), telecommunications suppliers proposed and agreed upon standards for third generation networks and Universal Terrestrial Radio Access Network (UTRAN) specifically. The UTRAN contains cellular base stations (also known as Node Bs) and Radio Network Controllers (RNCs). The RNC provides control functionalities for one or more Node Bs. Node B contains radio frequency transmitters and receivers used to communicate directly with the mobile UEs, which move freely around it. In this type of mobile network, the mobile UEs cannot communicate directly with each other but have to communicate with the Node B.

In addition, technological standard organizations such as the 3GPP forum, investigated enhanced ways to control and manage the operation of third generation networks with advance measurement. One result of the forum's work is the UTRAN Iur interface Radio Network Subsystem Application Part (RNSAP) signaling, as described in 3GPP TS 25.423 V3.14.2 (2004-07), for example. This standard specifies the radio network layer signaling procedures of the control plane between RNCs in UTRAN, in which the transmitted frequency use and power are ones of those measurements.

Mobile core and radio access network configuration are subjected to compliance with national/federal law and with the granted operational licensing from the communication regulators.

Base Stations and microwave links, which typically contain the most radiating source in the mobile system, are subjected to governmental laws and regulations as well as to local municipalities/ districts for building and construction permits. Thus, Base Stations require an operational permit and a building permit. The terms of the operational permit are subjected to national/federal regulation and are usually based on ICNIRP (International Council on Non-Ionizing Radiation Protection) recommendations regarding the level of radiation and power per transmitter source and from the construction aspects, to local municipalities and national interior ministries regulations.

Today, enforcing the regulations regarding the level of radiation emitted from the transmitting sources of mobile operators, requires measurements of the RF power density at each cellular site. However, such measurements present many technical challenges and difficulties. Protocols for the measurement of RF energy for the purpose of human exposure assessment often recommend the use of an "isotropic broadband probe" because this type of sensor responds equally to energy arriving from any direction, and over a broad frequency range, as does the human body. These instruments are commonly used because they allow a simple measurement. However, some of the meters used for typical RF compliance surveys are unable to accurately measure the low power densities, which are present at some cellular sites.

In parallel, enforcing the governmental regulations, as well as local municipalities and districts regulations, requires compliance with building and construction permits. However, as a part of the daily network optimization performed by the operator for performance improvement, and as part of technological changes and in order to meet the customer's demand for improved service, it is complicated and challenging (from the construction aspect), to maintain compliance with National Interior and communication ministries' regulations as well as those of the local municipalities and districts. This problem presents many operational challenges and difficulties, require on site labor intensive activates to ensure construction and permits compliance.

WO 2004/086066 discloses a system for monitoring the electromagnetic field strength received at a predetermined point of a monitored area. An electronic device senses the electromagnetic field fed to an antenna by a transmission apparatus and transmits a RF power signal indicative of the electromagnetic field strength to a control center, which provides a geographic database. A processing facility with the control center receives the RF power signal from the device and calculates the field strength that is received at the predetermined point from the antenna. This electronic device is expensive and is prone to failure, and is unable to detect building permit non-compliance events.

Based on the number of BS required to achieve cellular coverage requirement and the number of mobile operators operating in each country and state, a related construction and building permit challenge exists. It involves the concurrent presence of several inspectors to address all the different operational BSs and microwave antennas, such that the structural supervision data produced by each labor inspector has to be a combination of all the labor reports in the inspection spot. Realistically, this composite inspection activity of all BSs may be the most relevant inspection metric. However, once a structural/building or spectral violation or noncompliance is detected, it is required to identity the cause (e.g., tower height, floor size, number of antennas, room size, radiation safety zone, frequency assigned and license defined network performance requirement, etc.) for the incompliance. Surveying by performing spot measurements in a specific area fails to indicate the extent of the compliance failure.

In addition, the survey inspection must be performed in a time in which compliance failure variance indeed occurs. It is well known that the BSs' structural and spectral configurations at a cellular site, are not always constant. People use their cellular phones more at some times of the day, and on some days of the week, than others. The mobile network service providers maintain the base station configuration, the amount of frequencies and topology according to the additional capacity which becomes active as needed to meet the demands. Thus, the probability of detecting the construction and operational permit violations incompliance when not performing periodic inspection survey is relatively low.

Common construction and permit's inspection methods include construction supervisors performing intermediate surveys or construction based on complaints received from the public. Labor intensive supervision surveys are the common way of monitoring and supervising construction and operational permit's compliance. However, those surveys have many drawbacks. They hardly can prove continuous compliance with the existing permits, they are not practical for repeated large scale survey process, since they require manual collection of large volume of data ,thus make it hard to reference data from different sources. In addition, they are very time consuming and expensive.

In recent years, mobile networks have become more and more complex. As a result, there is a need for a simple and automated Operation and Maintenance (O&M) system. In order to decrease management costs, to use hardware in the most effective way, and to maximize the spectrum efficiency (which is typically a limited resource), mobile networks are adapted to produce real-time event messages. An event message is a measurement report sent between different components in the mobile network (e.g., eNBs E-UTRAN Node B, RNC, Node B, UE, etc). Event messages can be categorized to several types, depending on the types of measurements encapsulated within them, and on the network components participating in the messaging process.

The measurement reports are transferred through many types of messages including RRC (Radio Resource Control) protocol messages, NBAP (Node B Application Protocol) messages, and frame protocol messages. The different reports include a wide variety of parameter measurements, for example, BS configuration, mobile network topology, traffic volume, frequency channel number, channel quality, propagation delay, carrier power, path loss, and many more. The number of different parameters measured and reported reaches several hundreds in a typical mobile system. "Real-time performance monitoring and optimization of cellular systems", Per Gust.s, Per Magnusson, Jan Oom and Niclas Storm, all with Ericsson (Ericsson Review No. 01, 2002) discloses real-time optimization of a radio access network utilizing the system event messages. However, Ericsson (as other providers) utilizes real-time event messages for monitoring performance and system optimization, and not for radiation control.

None of the currently available techniques can provide a satisfying solution to the problem of managing, controlling and ensuring compliance to the variety of local licensing and permit regulations. Therefore, there is a need for a system that provides a continuous monitoring of permit and regulation of the mobile operators' network elements (core and radio), which allows accurate measurement, calculation and analysis of regulations' and permits' data, originating from different sources, for detecting and prevention of any permit violation or variance in real time.

It is therefore an object of the present invention to provide a software system for automatically and continuously managing and controlling of licensing and permits of the mobile providers' network.

Another object of the present invention is to provide a system for guaranteeing that mobile network operators, which are subjected to governmental laws and regulations, comply with national communication, environment, health and interior regulator's requirement permits and licenses.

A further object of the present invention is to accurately and remotely pre-alert and thus prevent during the cellular network planning and deployment stage any mobile operators' possible violations and anomalies at cellular sites and the core network.

Yet another object of the present invention is to accurately and remotely detect any mobile operators' noncompliance, violations and anomalies at cellular sites.

Another object of the present invention is to enable constricting the correct mode of payment of taxes, based on online remote software analysis of total floor space assigned for the use of mobile operator at each site location.

Another object of the present invention is to provide a system for detecting online violations and anomalies in real time, and for decreasing the average time for managing the violation anomalies.

Another object of the present invention is to enable immediate discovery of the source type of detected violations.

Yet another object of the present invention is to provide a cost-effective system for detecting regulation incompliance and operational and building permits violations.

Other objects and advantages of the invention will become apparent as the description proceeds.

### Summary of the Invention

The present invention is directed to a software based system for continuously monitoring the licensing and permit related data coming from one or more core networks, radio access networks, and radiation sources in a cellular site according to claim 12.

The software processing unit receives data files from the cellular core, access network and radiation sources and extracts the licensing and permit related data from the data files. The variance file is utilized for managing and controlling the cellular core, access network and radiation sources, and for detecting licensing and permit violation and noncompliance in the site.

The BS and the radiation sources may be wireless radio telecommunication non-ionizing radiation sources. The software processing unit may process and analyze the licensing and permit parameters of each cellular core, access network and radiation source according to the extracted radiation related data in near-real-time, essentially within seconds or minutes after their creation. The software processing unit may comprise:
a. a delacer, for extracting the licensing and permit related data from the XML data files;
b. a verificator for comparing the licensing and permits' related data with the licensing and permits of each BS and radiation sources; and
c. A construction generator, for constructing the element related to the permit and licensing of each BS and radiation sources, essentially in real time, for verification process.

The software delacer extracts the frequency spectrum use data, Network's Quality of Service data class performance and the data related to the civil engineering of each antenna and sector in the monitored site. It may encompass one or more decoders, adapted to analyze the data files received from the BS and radiation sources, in parallel.

A multi-point, multi technology and multi-mobile networks monitoring and measurement capabilities may be enabled via a single software monitoring and management system.

Software managed national mobile network spectral data may be used within large geographical area.

Mobile network operational and building permit may be measured monitored and managed under one centralized system.

Real measurement may be transformed into multiple location virtual civil engineering evaluation centers.

Software based civil engineering virtual survey will take place remotely on multiple site location without the need of civil engineering presence on a site or a plurality of sites, which will dramatically reduce the operational time and cost to perform the survey.

The data files may be XML data files that comprise real-time event messages, transferred between components in the monitored site. The verificator may further compare the licensing and permits' related data from the Access and Core Network and from the User Equipment units (UEs) with the licensing and permit related data from the BS and radiated sources, for detecting forgery in the operator reports.

The system may further comprise a filter for filtering out private data related to the operator clients from the XML data files, as well as from the network's sub-system configuration data files. The system may further comprise a history database that contains history data record definitions of any track record licensing and permit based data violation, variance and event handling definitions of the event track recording.

The present invention is also directed to software based method for continuously managing and controlling cellular core networks, radio access networks, and radiation sources in a cellular site according to claim 13.

The data files may be collected close to the operational time, without operator intervention for protecting against forgery.

The violation and variance data file may be sent online within minutes after the noncompliance or illegal occurrences to the BS and radiation sources regulator, wherein the file is utilized by the regulator for managing and controlling the cellular core and access network and radiation sources.

The data in the history database may be utilized for identifying violation, abnormal and illegal mobile network's operational patterns and behaviors for future regulation researches and construction.

Operator reports may be verified by comparing licensing and permits' related data from the User Equipment units (UEs) with licensing and permits' related data from the cellular core, from access network and from radiated sources operators.

The operational permits may be subject to regulations of Local district authorities or of municipal authorities.

### Brief Description of the Drawings

The above and other characteristics and advantages of the invention will be better understood through the following illustrative and non-limitative detailed description of embodiments thereof, with reference to the appended drawings, wherein:
- Fig. 1 is a high level schematic illustration of an on-line (national/federal and local) regulation and permits management and control system, constructed and operated in accordance with one embodiment of the present invention;
- Fig. 2 is a schematic block diagram of one exemplary embodiment of the noncompliance detecting part of the present invention;
- Fig. 3 is a schematic block diagram of a single point multi-technology, object class, base station handling under each mobile operator. Each base station data view and management part according to one embodiment of the present invention;
- Fig. 4 is a schematic block diagram of one exemplary embodiment describing the radio equipment information object class and the data retrieve process structure for managing the continues building permit process; and
- Fig. 5 is a schematic block diagram of the licensing and building permits and software based continues monitoring and management part, according to one embodiment of the present invention.

### Description of the Invention

In the following description, for the purpose of illustration, numerous specific details are provided. As will be apparent to the skilled person, however, the invention is not limited to such specific details and the skilled person will be able to devise alternative arrangements.

The key idea proposed by the present invention is to manage and control national regulation and permits, so as to verify an operator's compliance, online. The system proposed by the present invention is capable of transforming raw data from several mobile networks into a form that allows national and local management and supervision. It can detect online mobile network modification, analyze them via adjustable algorithms and alert supervisory bodies, mobile radiation source owners, and local municipalities and districts of local regulations and permit noncompliance, essentially in real-time. Each controller element in the core and radio access of a mobile network executes live relevant measurement for controlling and managing its functionality. The system proposed by the present invention uses those accurate controller elements and measurements and performs analysis and calculations, in order to compare them with the parameters set of the granted permit. The present invention proposed a method for transforming real measurement into a multiple location virtual civil engineering evaluation tool without the need to perform a practical engineering survey of each existing BS (which cannot practically take place for all base stations in the country/districts/municipalities all the time).

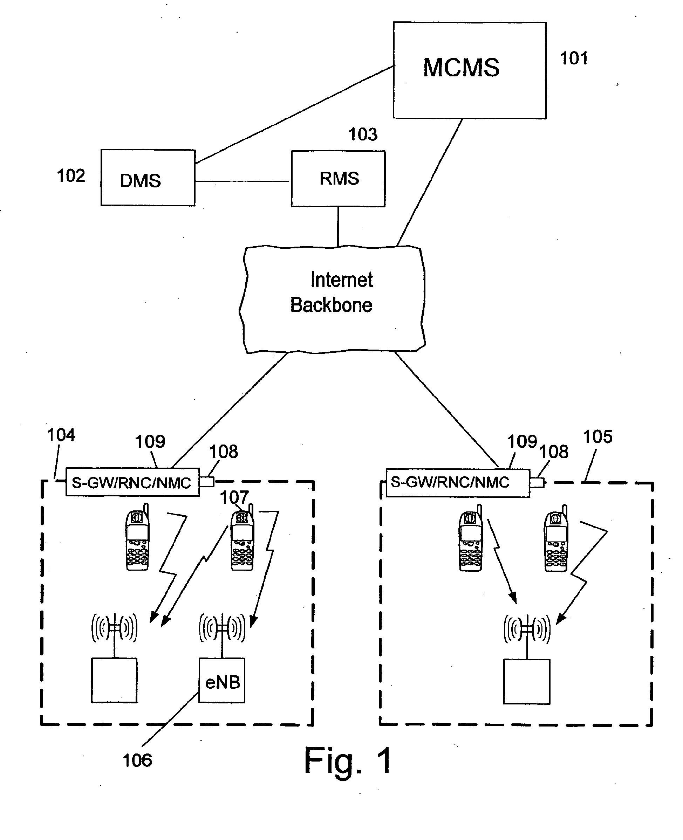

Fig. 1 is a high level schematic illustration of an on-line National Cellular Management System (NCMS) and the District/Municipality measurement and permit management system (DMS), constructed and operative in accordance with an embodiment of the present invention. The National Cellular Management system (NCMS) 101 is the National Telecom service control and management system, which interfaces with the District/Municipality measurement and permit management system (DMS) 102 and with the Radiation Management System (RMS), which is disclosed in WO2011/036664 that is incorporated herein by reference. The National Cellular Management System (NCMS) 101 interfaces and operates with one or more mobile network operators 104-105. The NCMS can be directly connected to the mobile networks 102-103 or through the Radiation Management System (RMS) 103. The connection interface between the mobile network and the NCMS and RMS is via the internet. Interface. Each access network 104-105 consists of one or more Gateways/controllers (S-GW/RNC/NMC) 109, antennas which carry the configuration and other permits' data of the eNB (extended Node B) 106 and the UE (User Equipment unit) 107. The system proposed by the present invention 101, is connected to the Mobile network's Gateways/Controllers (S-GW/RNC/NMC) 109. The present invention comprises of software modules, which continuously monitors and analyze the information transfer from the RMS 103 (which is disclosed in WO2011/036664 that is incorporated herein by reference) or between the Gateways/controllers (S-GW/RNC/NMC) 109.

Each access network 104-105 consists of one or more Mobile network's Gateways/Controllers (S-GW/RNC/NMC) 109, antennas which carry the configuration and other permits' data of the eNB (extended Node B) 106 and the UE (User Equipment unit) 107. NCMS 101 and DMS 102 , can be connected to the Radiation Management System (RMS) 103 or directly to the Mobile network's Gateways/Controllers (S-GW/RNC/NMC) 109. The system comprises a software module, which continuously monitors and analyzes the information transfers from the RMS 103 (Option A) or between the Gateways/controllers (S-GW/RNC/NMC) 109.

The information transfers between the RNC 107 and the BS 104 (which is disclosed in WO2011/036664 that is incorporated herein by reference) comprises network measurements including performance measurement, DownLink (DL) power measurements, UpLink (UL) power measurements, and changes to the configuration and topology of each BS. Each BS and UE is capable of measuring and calculating a set of predefined performance factors, according to current 3GPP 25.423 specifications, such as, a current configuration as well as other measurements. Data regarding the antenna's position and other given measurements may also be obtained.

In one embodiment, the system proposed by the present invention is adapted to retrieve the on-line related parameters to the licensing and permits' data from each antenna's coverage area. By knowing the specific location of the BS, microwave link and any other radiation source (e.g., the latitude and longitude, which can be found in the permit approval given by the regulator), the system is able to determine which radiation source is responsible for any noncompliance with the regulation or permit. The system manages a eNB (extended Node B) 106 or radiation source configuration and location table, which are updated each time a new site becomes active or each time a eNB or radiation source is relocated. The site specific location may be retrieved from other database sources or from the updated location table. The system also collect and analyzes Quality of Service (QoS) parameters that are related to the performance of each eNB (extended Node B) 106 and each access network 104-105, and verifies whether or not their performance complies with the operational permit provided to the mobile operator by the regulator.

Any regulation permit violation or noncompliance in one of the permit criteria which is detected, may be geographically displayed, based (for example) on the site location information tables and on configuration and topology delta (Δ) values. In addition, the method proposed by the present invention is adapted to utilize the geographic data or cell/site ID to determine the recorded variance of the eNB or radiation source footprints. The system may also collect mobile permit and regulation data and store the information in a database, for further regulation investigation.

In addition, the District/Municipality measurement and permit management system (DMS) 102 retrieves operational information related to each eNB within the District/Municipality and compares that to the terms and values assigned to each specific eNB building permit.

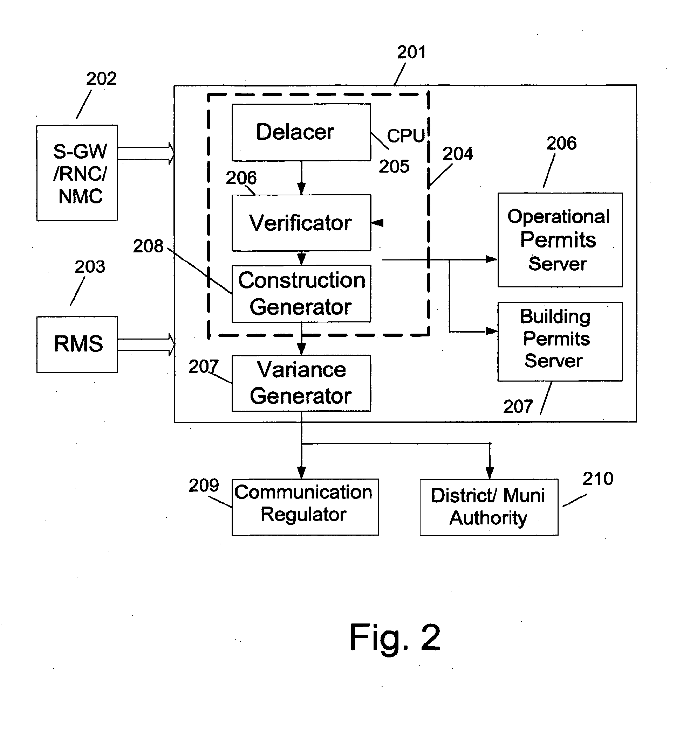

Fig. 2 is a schematic block diagram of one exemplary embodiment of the noncompliance detecting part, according to the present invention. The computerized system 201 continuously monitors and analyzes, using software, the licensing and building permit's data originating from one or more eNB and radiation sources (microwave links) in a site for detecting license and permit violations and any other related anomalies. In this embodiment, the system 202 receives data files from the National Cellular Management System (NCMS) 202 or from the Radiation Monitoring System (RMS) 203 (which is disclosed in WO2011/036664 that is incorporated herein by reference), from the S-GW/RNC/NMC 202 or from the RMS 203, collects and gathers performance data on each antenna/sector in the mobile system. According to this embodiment, processing unit 203 receives XML and other formats of data files and configuration files from S-GW/RNC/NMC 202 and the RMS 203 and extracts from them the licensing and permits' related data. The software processing unit 204 then compares the extracted licensing and permits related data with the regulation operational permits server 206 or building permit server 207 of the eNB and other radiation sources (radio microwave transmission links). The regulator's operational permits are provided by the operational permits server 206 connected to the processing unit 204. The building permits are provided by the district/municipality permit server 207. Variance generator 208, connected to processing unit 204, receives the compared licensing and permits data and generates a variance data file. In this embodiment, the variance data file contains all the licensing and permit violations and anomalies per each antenna/sector. The variance data file is sent to communication regulator 209 and to the district authority 210, relatively to the variance type, and utilizes them respectively, for managing and controlling the BS, transmission site, eNB and other radiation sources in the monitored site.

In this embodiment, the BS and other radiation sources are wireless radio telecommunication non-ionizing radiation sources: The object types of the licensing and permits related data are constantly changing, and therefore, in order to overcome situations in which violation of those enforced elements, object types, occurs and not measured, the software processing unit 204 constantly extracts the licensing and permits software related data of each BS, transmission site, eNB and other radiation source from the XML and other format of data files and the network configuration. The software processing unit 204 then accordingly structures the network configuration and licensing and permits data for each BS, eNB and other radiation source. The operational licensing and permits data is analyzed almost in real time (within minutes). Thus, the licensing and permits violation and noncompliance is immediately detected.

According to one embodiment, the processing unit comprises a delacer 205 and a verificator 206. Delacer 205 is a software processing module that extracts the licensing and permits related data from the XML (and other format of data) file together with the configuration data files (e.g., configuration data of each antenna/sector in the monitored site). The data is extracted from all the communication protocol layers (e.g., transport, physical, etc.) by filtering the relevant parameter values from all the communication protocol layers (as disclosed in WO2011/036664 that is incorporate herein by reference). The essentially real time operation is allowed due to a smart process which executes the XML (and other format data) files and network topology data filtering, and analyzes on one or more decoders in the delacer 205, in parallel. The XML (and other format data) files with the network configuration data file comprises real time event messages which are transferred between the different components in the monitored site. A filter is utilizes to filter out, if required, private data related to the operator clients from the XML (and other format data) files.

Verificator 206 is a processing module that receives the filtered private data and compares the extracted operational licensing and building permits' of the BS and any other radiation sources. Other data related to the radiation permits (and disclosed in WO2011/036664 that is are incorporate herein by reference).

Even though the system 201 (disclosed in WO2011/036664 that is incorporate herein by reference) collects the data files close to the radiation power transmissions, namely straight from the Mobile Network's Gateways/Controllers (S-GW/RNC/NMC), without operator data transaction, and mark the data to prevent forgery, the verificator 206 compares the licensing and permits' related data from the User Equipment units (UEs) side with the licensing and permits' related data from the radiated sources operator, in order to detect forgery in the operator reports. The system 201 is adapted to send the generated anomaly data file online to the operator's control center, to the district/municipality and other radiation sources regulator. The anomaly data file is utilized by the regulator for managing and controlling the BS, eNB and other radiation sources. The generated violation and noncompliance data files are also saved in a database for identifying abnormal and illegal licensing and permit patterns and behaviors for future assessments and evaluation of licensing and permit compliance of the mobile operators.

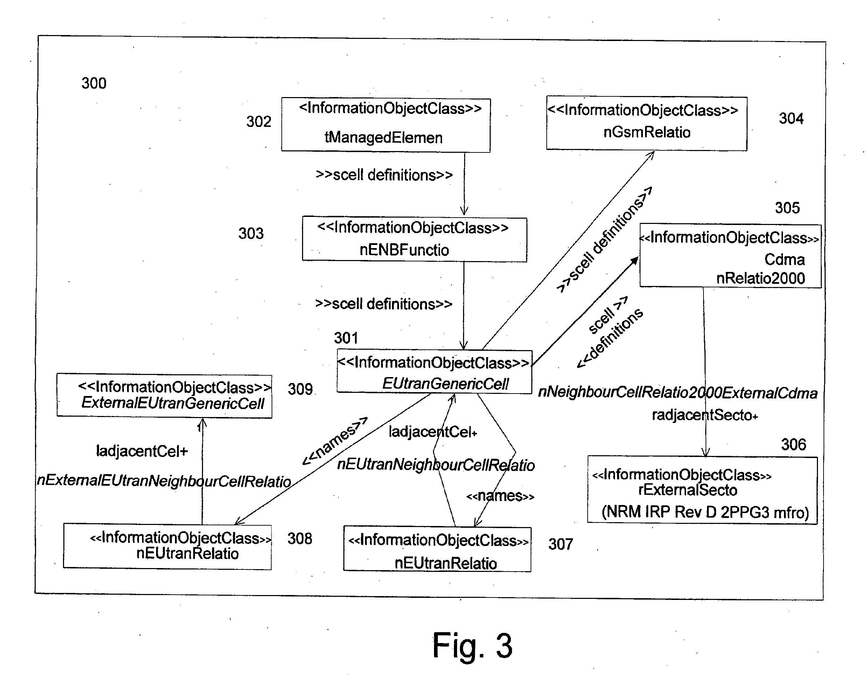

Fig. 3 is a schematic block diagram of the cell object type information relationships of each E-UTRAN (Evolved Universal Terrestrial Radio Access network). The network side of E-UTRAN consists only of BS, while eNode and BS, which generate the data for collection by the Gateways/controllers (S-GW/RNC/NMC) 109. The Gateways/controllers (S-GW/RNC/NMC) 109 is one of the points of access to the National Cellular Management System (NCMS) 101 and/or to the radiation management system (RMS) 103. In this embodiment, the software system 104 and 105 are constructed from base station (eNB,NodeB, BS) and controllers (GW, RNC BSC) related to the relevant different mobile network technologies, being uses by each of the mobile operators. The object type information is collected from each logical element. The object type information from the Managed Element 302, which is defined according to the 3GPP TS 32.622 interfaces with ENB Function element 303, which include the following function: radio resource management - RRM, radio bearer control, radio admission control - access control, connection mobility management, resource scheduling between UEs and eNB radios, header compression, link encryption of the user data stream, packet routing of user data towards its destination (usually to the EPC or other eNBs), scheduling and transmitting paging messages (incoming calls and connection requests), broadcast information coordination (system information), and measurement reporting (to assist in handover decisions). The object class information regarding the BS and cell in operation is received also from the GSM network trough the GSM Relation element 304, which is defined according to the 3GPP TS 32.652 standard. CDMA2000 relation element 305 defines the data transfer in the information object class for the use of one single point EUtran Generic cell 301, which enable a multi-network, multi technology data interface point to be comprehensive object class information to the software monitoring and management system presented hereby.

In this embodiment, the presented object classes together with neighboring information object classes 306-309, provide object class information is essential to the knowhow, management and control of each base station, cell source and to the analysis of location data, assurance of Quality of Service class regulation's criteria's and the local district management of the building permits, as well as the related payment derived from it for the listed operated base stations and cells under each local district.

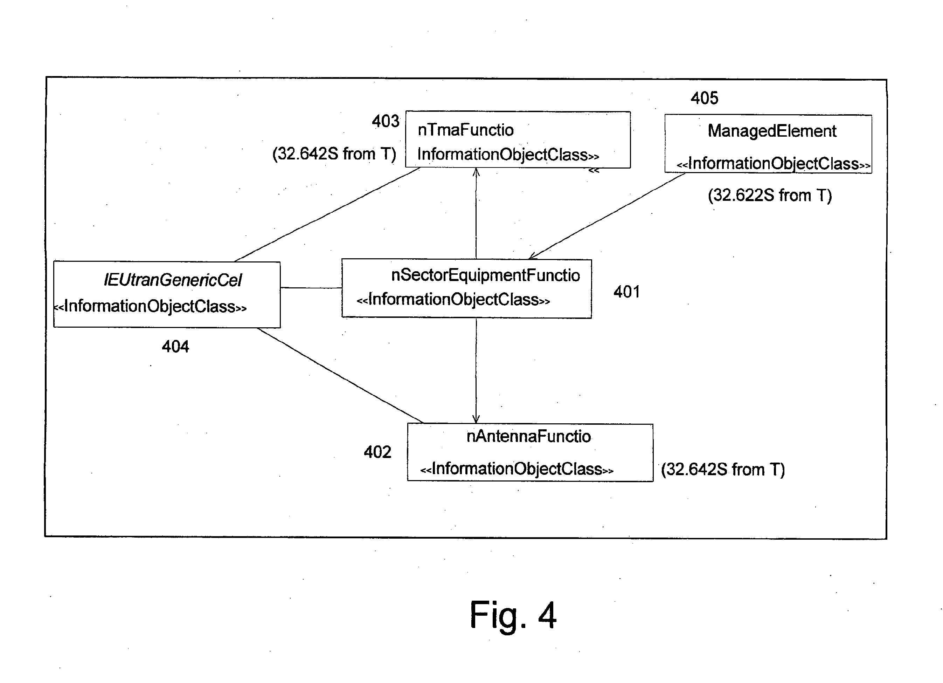

Fig. 4 is a schematic block diagram of one exemplary embodiment of the present invention. In this embodiment, the radio equipment data retrieval and structure management process is described. The decoder 204 retrieves the information object class from the EUtran cell manager 404 and from the support manage element unit 405, the sector equipment information unit 401, the Antenna information unit 402 and Tower Mounted Amplifier (TMA) 403 information unit to be used by the local district software permits management system 102. The data included in the object class information is constructed to a physical object class map of all the relevant physical elements related to the assigned building permit for each base station and cell type.

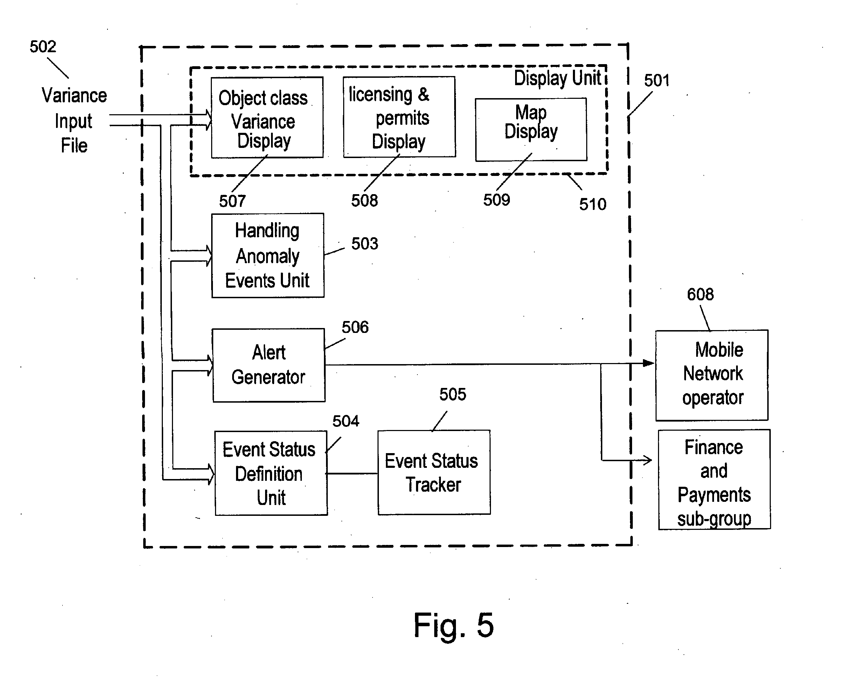

Fig. 5 is a schematic block diagram of the licensing and building permits, software based continues monitoring and management part, according to one embodiment of the present invention. In this embodiment, the software based continuous monitoring and management (of licensing and building permit) system 501 receives one multi-site object's class input file 502 each 15 minutes. The multi-site object's class input file is then executed and data is presented on display unit 510. The permit's variance data is detected are presented on the object class variance data display 507, gathered licensing and permits' related information is displayed on licensing and permits' display 508, and a map for reviewing the geographical analyzed data is display on map display 509. The multi-site object's class file 502 is provided to the handing the object class variance data event element 503 and to the alert generator 506, which generates and sends an alert message to the mobile operator 511 or to the regulator, as well as to the finance and payment sub-group 512. The multi-site object's class data file 502 is also provided to event status definition unit 504, which marks the object class variance data starting status, for further use by event tracker 505. Event tracker 505 (disclosed in WO2011/036664 that is incorporate herein by reference) is responsible for later tracking of licensing and permits' pattern object class variance data and for public exposure health.

One of the object of the present invention is the ability to perform virtual continues civil engineering survey via software in each and every cellular site, in each local district and municipality. The new proposed algorithms construct the actual civil engineering structure of each cellular site, taking into account the element from the permit and the ongoing changes in the construction trough structural generation algorithms. The data from the radiation permit (disclosed in WO2011/03666 that is incorporate herein by reference), is transferred to the construction generator to build the civil engineering component of the base station. The construction generator algorithm builds the floor space uses by each base station, while calculating the sum of the hardware elements in the communication room (if exist) or the sum of the communication element defined in the site. The generator triggers routine Multi-Element Software Survey (MESS), which builds the component in the site from the data retrieved to a civil engineering structure and passes to the algorithm's output to the verifictor, for verification with the actual building permit. Any variation between the construction generator and the building permit is recorded and transferred to the variance generator.

The system proposed by the present invention includes also a map view. The map view is a geographic information system (GIS) view of the location of the detected licensing and permits' noncompliance. This display helps the user to define the severity of the impact of the licensing and permits' noncompliance event, based on the type of the area (e.g., urban, suburban, rural). The map view contains relevant data regarding the detected noncompliance event such as, company owner, date and time of the licensing and permits' noncompliance event, percentage of deviation from the cellular antenna, and power values.

The system proposed by the present invention includes a dynamic multizone, graphical user interface (GUI) which provides a convenient working environment for national view, as well as local (district/municipality) view. The GUI includes an environmental research and report tool, divided to three main portions: licensing and permits' research data setting, licensing and permits' research data view, and variance data display view. In one embodiment, the user can define several types of information search, for example, "General", "Abnormal", and "Reference". "General" allows the user performing a search by operators name, sector or current sector status. "Abnormal" allows the user performing a search by permit violation category; Licensing and building permits' noncompliance, violation from radiation permit retrieve from the RMS 203, or by date range. "Reference" allows the user performing a research based on object class category. The GUI also provides a view of requests for new licensing and permits' installation and licensing and permits' permit modification requests, which have been sent to the relevant national/federal regulation authority.

The status of each sector is controlled by the software based system, proposed by the present invention. The user can manage abnormal licensing and permits' events detected by the system of the present invention, and to send emails, alerts, SMS alerts, etc., to a pre-defined distribution list. The list can be set up in the Company Details Toolbar. The user can change the status of the sector as part of event handling.

The system proposed by the present invention is also adapted to aggregate different BS or other radiation sources under the same location, into total licensing and permits' violations. The system can interface with a variety of cellular planning and operation tools in order to prevent licensing and permits' noncompliance of occurrence even in the radio planning stage and in the operational deployment stage. The system is further adapted to use and filter online data flow that contains user's data calls, so that the system will be using only licensing and permits' related data as an input. Licensing and permits' related data is considered to be all the data included in the permit that can be retrieved online from the mobile operator. The licensing and permits' related data is filtered from comprehensive event based records.

The software system proposed by the present invention is also adapted to process and analyze the data relevant for the licensing and permits' control. The system filters the relevant data from all the messages that go through the cellular system. The system is adapted to access any level of details, from high level licensing and permits' related data to the lowest licensing and permits' data related bits in the messages. Typically, every second, two messages are transferred in the network. Due to the huge size of collected data, the full framework uses fast processing and filtering algorithms to ensure close to real-time analysis.

The data must be collected as is, namely, without any operator's intervention. Thus, the data is collected close to the licensing and permits' violation and is immediately protected against forgery as the RMS 203, each 15 minutes, all the messages are collected (approximately several hundreds of MBytes) and saved in a file. This file contains all the parameters as reported by the provider cellular system. To prevent future changes in the file, the system then "signs" the file (using water mark, for example) immediately after its creation. The system proposed by the present invention can provide seamless integration between different sources of data, from several network infrastructure vendors (e.g., ZTE, HUAWEI, Ericsson, NOKIA, Alcatel, Motorola etc).

The real time continuous management is achieved due to a unique database managed by system 201. The database is dynamically updated, based on the relevant parameters selected from the hundreds of parameters collected from the massages. Tables 1.1-1.3 disclose some of these parameters, which are monitored and used for the licensing and permits' control, according to one embodiment of the present invention.

Table 1.1 is a reference data table defined per each cell and sector specifying the generic parameter set per each category. The table is used to reference each cell and sector during the initial permit validation process.

**Table 1.1 - Attribute of Cell Parameter for Monitoring**

| | | | |
|---|---|---|---|
| id | M | M | - |
| retTiltValue | O | M | M |
| bearing | O | M | M |
| retGroupName | O | M | M |
| height | O | M | M |
| maxAzimuthValue | O | M | M |
| minAzimuthValue | O | M | M |
| horizBeamwidth | O | M | M |
| vertBeamwidth | O | M | M |
| theCellList | M | M | - |

The set of parameters are qualified parameters information which are set under the 3GPP TS 32.792 V10.0.0 (2011-06) standard.
a) The parameter set is described as follows: The height of an antenna above sea level. The value of this attribute has no operational impact on the network, e.g. the NE behavior is not affected by the value setting of this attribute. Note as well that this attribute is not supported over the Iu-antenna interface according to Ref. 3GPP TS 25.466.
b) RetTiltValue: The electrical tilt setting of the antenna, "Tilt value" in Ref. 3GPP TS 25.466
c) MaxAzimuthValue: The maximum amount of change of azimuth the RET system can support. This is the change in degrees clockwise.

Table 1.2 defines the Quality of Service (QoS) monitoring and measurement report mapping in which the system is received on each data cycle. This Table describes the QoS classes in which the system will categorize each network quality.

**Table 1.2 - Mobile Network QoS classes.**

| **Traffic class** | **Conversational class conversational RT** | **Streaming class streaming RT** | **Interactive class Interactive best effort** | **Background Background test effort** |
|---|---|---|---|---|
| Fundamental characteristics | - Preserve time relation (variation) between information entities of the stream | - Preserve time relation (variation) between information entities of the stream | - Request response pattern | - Destination is not expecting the data within a certain time |
| | Conversational pattern (stringent and low delay) | | - Preserve payload content | - Preserve payload content |
| Example of the application | - voice | - streaming video | - Web browsing | - background download of emails |

The definitions of the QoS in managing the performance of mobile networks are categorized into several classes. The category classes are referred to as traffic classes have to take into account the restrictions and limitations of the air interface. The QoS mechanisms provided in the mobile networks are robust and capable of providing reasonable QoS resolution.

There are four different QoS classes: conversational class; streaming class; interactive class; and background class.

The main distinguishing factor between these QoS classes is how delay sensitive the data traffic is: Conversational class is meant for traffic which is very delay sensitive, while Background class is the most delay insensitive traffic class.

Conversational and Streaming classes are mainly intended to be used to carry real-time traffic flows. The main divider between them is how delay sensitive the traffic is. Conversational real-time services, like video telephony, are the most delay sensitive applications and those data streams should be carried in Conversational class. Interactive class and Background are mainly meant to be used by traditional Internet applications like WWW, Email, Telnet, FTP and News. Due to looser delay requirements, compared to conversational and streaming classes, both of them provide better error rate by means of channel coding and retransmission. The main difference between Interactive and Background class is that Interactive class is mainly used by interactive applications (e.g. interactive Email or interactive Web browsing), while Background class is meant for background traffic (e.g. background download of Emails or background file downloading). Responsiveness of the interactive applications is ensured by separating interactive and background applications. Traffic in the Interactive class has higher priority in scheduling than Background class traffic, so background applications use transmission resources only when interactive applications do not need them. This is very important in wireless environment, where the bandwidth is low compared to fixed networks.

However, these are only typical examples of usage of the traffic classes. There is in particular no strict one-to-one mapping between classes of service (as defined in TS 22.105 [5]) and the traffic classes defined in this TS. For instance, a service interactive by nature can very well use the Conversational traffic class if the application or the user has tight requirements on delay.

Table 1.3 is an exemplary dynamic data table updated per introduction of product detection by the system. The process algorithm recognized the type on base station communication cabinet is in use and structure the minimal size of floor space allocated for the base station. The dimensions of the calculated floor space are then compare to the dimension exists in the building permit for verification.

**Table 1.3**

| **INTERNAL_VOLTAGE** | **HEIGHT** | **DEPTH** | **WIDTH** | **PRODUCT_NAME** |
|---|---|---|---|---|
| -48 | 1.623 | 0.71 | 1.3 | RBS3101 |
| -48 | 1.626 | 0.926 | 1.3 | RBS3106 |
| -48 | 1.65 | 0.45 | 0.6 | RBS3202 |
| -48 | 1.95 | 0.45 | 0.6 | RBS3206 |
| -48 | 0.95 | 0.6 | 0.6 | RBS3216 |
| -48 | 1.4 | 0.815 | 0.648 | BBS2116 |
| -43 | 1.43 | 0.88 | 0.65 | RBS3116 |

The system 202 is targeted to monitor, detect and manage cellular core and radio access network as well as BS and other radiation sources from different type of technologies and mobile vendors' infrastructures. Examples of the different support technologies are Universal Mobile Telecommunications System (UMTS), Terrestrial Radio Access Network (UTRAN), Global System for Mobile Communications (GSM), Integrated Digital Enhanced Network (iDEN), Code Division Multiple Access (CDMA), Worldwide Interoperability for Microwave Access (WiMAX), 3GPP Long Term Evolution (LTE), and any other mobile telephone technology.

Therefore, the system complies with all existing standards and protocols. One example is the 3GPP standard, in which relevant cell/sector configurations set under TS 32.612: "Telecommunication management; Configuration Management (CM); Bulk CM Integration Reference Point (IRP): Information Service (IS)". The tables provided an example of the parameters sets defined in the above telecom protocol.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A software based system (201) for continuously monitoring the licensing and permit related data coming from one or more core networks, radio access networks, and radiation sources in a cellular site, comprising:
a. an operational permit server (206) in which is stored national regulator related license permit data of radiation sources;
b. a building permit server (207) in which is stored district or municipality related building permit data of said radiation sources;
c. means for collecting raw data related to radiation sources of a mobile network (109) associated with an extended node (106);
d. a software processing unit (204) for extracting said collected raw data and for comparing said extracted data with said stored license permit data; and
e. a variance and violation generator (208), for receiving said compared license permit data from said software processing unit, and for generating in response a variance and violation data file, wherein said variance and violation file is utilized for managing and controlling cellular core network, radio access network, and radiation sources, and for detecting licensing permit violation and noncompliance in said site,
***characterized in that*** said means for collecting raw data is means (103, 109, 202, 203, 204) for remote online collecting from a mobile operator and dynamically updating raw data related to a core network, radio access network, and radiation sources of said mobile network without operator intervention, including license permit data and building permit data associated with an extended node (106) and user equipment (107),
wherein said software processing unit is operable to extract the remote online license permit data and building permit data from said remote online collected data by filtering relevant parameter values from all communication protocol layers, and to compare said extracted license permit data and building permit data online with said stored license permit data and building permit data, respectively,
wherein said software processing unit comprises a construction generator (208) for remotely calculating floor space allocation in a communication room of said site by determining a number of hardware elements in use in said communication room and dimensions of cabinets for said number of hardware elements, and one or more decoders for remotely obtaining data from an antenna information unit (402) and a tower mounted amplifier information unit (403) associated with quality of service parameters related to the performance of each extended node,
wherein said variance and violation generator is also operable to receive said online compared license permit data and building permit data from said software processing unit, and to generate in response an online variance and violation data file.

2. A system according to claim 1, wherein the radiation sources are wireless radio telecommunication non-ionizing radiation sources.

3. A system according to claim 1, in which the software processing unit processes and analyzes the licensing and permit parameters of each cellular core, access network and radiation source according to the extracted radiation related data; or
processes and analyzes the licensing and permit parameters in near-real-time, essentially within seconds or minutes after their creation.

4. A system according to claim 1, in which a multi-point, multi technology and multi-mobile networks monitoring and measurement capabilities are enabled via a single software monitoring and management system;
software managed national mobile network spectral data is used within large geographical area;
mobile network operational and building permit are measured, monitored and managed under one centralized system; or
real measurement is transformed into multiple location virtual civil engineering evaluation centers.

5. A system according to claim 1, in which the data files are XML data files that comprise real-time event messages, transferred between components in the monitored site.

6. A system according to claim 1, in which the software processing unit comprises:
a. a delacer, for extracting the licensing and permit related data from the XML data files;
b. a verificator for comparing said licensing and permits' related data with the licensing and permits of each BS and radiation sources; and
c. the construction generator, for constructing the element related to the permit and licensing of each BS and radiation sources, essentially in real time, for verification process.

7. A system according to claim 6, in which the software delacer extracts the frequency spectrum use data, Network's Quality of Service data class performance and the data related to the civil engineering of each antenna and sector in the monitored site; or the delacer encompasses one or more decoders, adapted to analyze the data files received from the radiation sources, in parallel.

8. A system according to claim 6, in which the verificator further compares the licensing and permits' related data from the Access and Core Network and from the User Equipment units (UEs) with the licensing and permit related data from the radiation sources, for detecting forgery in the operator reports.

9. A system according to claim 1, further comprising a filter for filtering out private data related to the operator clients from the XML data files or for filtering out private data related to the operator clients from the network's sub-system configuration data files.

10. A system according to claim 1, further comprising a history database containing history data record definitions of any track record licensing and permit based data violation, variance and event handling definitions of the event track recording.

11. A system according to claim 1, in which the operational permits are subject to regulations of Local district authorities or of municipal authorities.

12. A system according to claim 1, in which the collected raw data includes antenna related power measurement data, microwave link data and performance factor data, and configuration data.

13. A software based method for continuously managing and controlling cellular core networks, radio access networks, and radiation sources in a cellular site, comprising the steps of
a. collecting raw data, related to radiation sources of a mobile network associated with an extended node (106);
b. signing a file associated with said collected data immediately after its creation;
c. by a software processing unit (204), extracting said collected raw data and comparing said extracted data with stored national regulator related license permit data of a radiation source in a cellular site; and
d. by a variance and violation generator (208), receiving said compared license permit data and generating in response a variance and violation data file, wherein said variance and violation file is utilized for managing and controlling cellular core network, radio access network, and radiation sources, and for detecting licensing permit violation and noncompliance in said site;
***characterized in that*** the step of collecting raw data is performed remotely and online with respect to a mobile operator in order to dynamically update raw data related to a core network, radio access network, and radiation sources of said mobile network without operator intervention, sad raw data including license permit data and district or municipality related building permit data associated with an extended node (106) and user equipment (107),
wherein said software processing unit extracts the license permit data and building permit data from said remote online collected data by filtering relevant parameter values from all communication protocol layers, and compares said extracted license permit data and building permit data online with stored license permit data and building permit data, respectively,
wherein said software processing unit remotely calculates floor space allocation in a communication room of said site by determining a number of hardware elements in use in said communication room and dimensions of cabinets for said number of hardware elements, and also remotely obtains data from an antenna information unit (402) and a tower mounted amplifier information unit (403) associated with quality of service parameters related to the performance of each extended node,
wherein said license permit data and said building permit data is extracted from said remote online collected data by filtering relevant parameters values from all communication protocol layers and ***in that*** said extracted license permit data and building permit data is compared online with said stored license permit data and building permit data, respectively,
wherein said online compared license permit data and building permit data is received in response to an online variance and violation data file that is generated.

14. The method of claim 13, further comprising:
collecting the data files close to the operational time, without operator intervention for protecting against forgery;
sending online the violation and variance data file within minutes after the noncompliance or illegal occurrences to a radiation sources regulator, wherein said file is utilized by the regulator for managing and controlling said cellular core and access network and radiation sources; or
utilizing data in a history database for identifying violation, abnormal and illegal mobile network's operational patterns and behaviors for future regulation researches and construction.

15. The method of claim 13, further comprising verifying operator reports by comparing licensing and permits' related data from User Equipment units (UEs) with licensing and permits' related data from the cellular core, from access network and from radiation source operators.

## Patentansprüche

1. Softwarebasiertes System (201) zur kontinuierlichen Überwachungs- und genehmigungsbezogenen Daten von einem oder mehreren Kernnetzen, Funkzugangsnetzen und Strahlungsquellen in einer zellularen Station, aufweisend:
a. einen betriebsfähigen Genehmigungs-Server (206), in dem auf Strahlungsquellen bezogene Lizenz-Genehmigungs-Daten von nationalen Regulierungsbehörden gespeichert sind;
b. einen Baugenehmigungs-Server (207), in dem bezirks- oder gemeindebezogene Baugenehmigungsdaten für die Strahlungsquellen gespeichert sind;
c. Mittel zum Sammeln von Rohdaten bezogen auf Strahlungsquellen eines mobilen Netzes (109), dem ein erweiterter Knoten (106) zugeordnet ist;
d. eine Softwareverarbeitungseinrichtung (204) zum Extrahieren der gesammelten Rohdaten und zum Vergleichen der extrahierten Daten mit den gespeicherten Lizenz-Genehmigungs-Daten; und
e. einen Varianz- und Violationsgenerator (208) zum Empfangen der verglichenen Lizenz-Genehmigungs-Daten von der Softwareverarbeitungsvorrichtung und zum Erzeugen einer Varianz- und Violationsdatei als Reaktion, wobei die Varianz- und Violationsdatei für die Verwaltung und Überwachung von zellularen Kernnetzen, Funkzugangsnetzen und Strahlungsquellen benutzt wird, und zum Erkennen von Lizenz-Genehmigungs-Verletzungen und Nichtübereinstimmungen an dem Ort,
**dadurch gekennzeichnet, dass** die Mittel zum Sammeln von Rohdaten Mittel (103, 109, 202, 203, 204) für Fern-Online-Sammeln von einem mobilen Operator und dynamischen Aktualisieren von Rohdaten mit Bezug zu einem Kernnetz, Funkzugangsnetz und Strahlungsquellen des mobilen Netzes ohne Operatoreingriff, einschließlich Lizenz-Genehmigungs-Daten und Baugenehmigungsdaten, die einem erweiterten Knoten (106) und Anwenderausrüstung (107) zugeordnet sind,
wobei die Softwareverarbeitungsvorrichtung operabel ist für ein Extrahieren der Fern-Online-Lizenz-Genehmigungs-Daten und Baugenehmigungsdaten von den fern-online gesammelten Daten durch Filtern relevanter Parameterwerte von allen Kommunikationsprotokollschichten, und für ein Vergleichen der extrahierten Lizenz-Genehmigungs-Daten und Baugenehmigungsdaten online mit den gespeicherten Lizenz-Genehmigungs-Daten beziehungsweise Baugenehmigungsdaten,
wobei die Softwareverarbeitungsvorrichtung einen Konstruktionsgenerator (208) zum Fernberechnen der Zuteilung von Fußbodenfläche in einem Kommunikationsraum des Ortes durch Bestimmen einer Anzahl von Hardware-Elementen, die im Kommunikationsraum in Anwendung sind, und von Abmessungen von Schränken in der Anzahl von Hardware-Elementen, und einem oder mehreren Decodern für Fernbezug von Daten von einer Antennen-Informationsvorrichtung (402) und einer turmmontierten Verstärker-Informationsvorrichtung (403), die Quality-of-Service-Parameter zugeordnet ist, welche sich auf die Leistung jedes erweiterten Knotens bezieht, aufweist,
wobei der Varianz- und Violationsgenerator auch operabel ist zum Empfangen von online verglichenen Lizenz-Genehmigungs-Daten und Baugenehmigungsdaten von der Softwareverarbeitungsvorrichtung und zum Erzeugen einer Varianz- und Violationsdatei online als Reaktion.

2. System nach Anspruch 1, wobei die Strahlungsquellen drahtlose, nichtionisierende Funk-Telekommunikations-Strahlungsquellen sind.

3. System nach Anspruch 1, wobei Softwareverarbeitungsvorrichtung die Lizenz- und Genehmigungsparameter jedes zellularen Kerns, Zugangsnetzes und jeder Strahlungsquelle gemäß den extrahierten strahlungsbezogenen Daten verarbeitet und analysiert; oder
die Lizenz- und Genehmigungsparameter in annähernd Echtzeit, im Wesentlichen innerhalb von Sekunden oder Minuten nach deren Erstellung, verarbeitet und analysiert.

4. System nach Anspruch 1, wobei Multipunkt-, Multitechnologie- und Multimobil-Netz-Überwachungs- und Messkapazitäten über ein einzelnes Software-Überwachungs- und Verwaltungssystem betriebsfähig sind;
Spektraldaten von einem software-verwalteten, nationalen mobilen Netz innerhalb großer geographischer Gebiete benutzt werden;
Betriebs- und Baugenehmigung von mobilen Netzen werden gemessen, überwacht und verwaltet in einem zentralen System; oder
echte Messung wird umgewandelt in virtuelle Hoch- und Tiefbau-Auswertungszentren an mehreren Standorten.

5. System nach Anspruch 1, wobei die Dateien XML-Dateien sind, die Ereignisnachrichten in Echtzeit aufweisen, die zwischen Komponenten am überwachten Standort übertragen worden sind.

6. System nach Anspruch 1, wobei die Softwareverarbeitungsvorrichtung Folgendes aufweist:
a. einen Delacer, zum Extrahieren der auf Lizenzen und Genehmigungen bezogenen Daten aus dem XML-Dateien;
b. einen Verifikator zum Vergleichen der auf Lizenzen und Genehmigungen bezogenen Daten jedes BS und jeder Strahlungsquelle; und
c. den Konstruktionsgenerator zum Konstruieren des Elements, das sich auf die Genehmigung und Lizenz jedes BS und alle Strahlungsquellen bezieht, im Wesentlichen in Echtzeit, für Verifizierungszwecke.

7. System nach Anspruch 6, wobei der Software-Delacer das Frequenz-Spektrum der Datennutzung, die Klassenperformance der Quality-of-Service-Daten und der auf den Hoch- und Tiefbau jeder Antenne und den Sektor am überwachten Standort bezogenen Daten; oder der Delacer umfasst einen oder mehrere Decoder, die angepasst sind für ein paralleles Analysieren der von den Strahlungsquellen empfangenen Dateien.

8. System nach Anspruch 6, wobei der Verifikator ferner die auf Lizenzen und Genehmigungen bezogenen Daten vom Zugangs- und Kernnetz und von den Anwender-Ausrüstungs-Einheiten (UE) bezogenen Daten mit den auf Lizenzen und Genehmigungen bezogenen Daten von den Strahlungsquellen vergleicht, um Fälschungen in den Operatorberichten zu erkennen.

9. System nach Anspruch 1, ferner aufweisend einen Filter zum Ausfiltern persönliche Daten bezogen auf Klienten des Betreibers von den XML-Dateien oder zum Ausfiltern von auf persönliche Daten bezogen auf Klienten des Betreibers aus den Konfigurationsdateien der Netz-Subsystems.

10. System nach Anspruch 1, ferner aufweisend eine Historik-Datenbank, die Historikdaten-Definitionen aller Nachverfolgungen über Violation, Varianz und Ereignishandhabungs-Definitionen der Ereignis-Nachverfolgungs-Aufzeichnungen von Lizenz und Genehmigungen basierenden Daten.

11. System nach Anspruch 1, wobei die betriebsbezogenen Genehmigungen Gegenstand von Regulierungen durch lokale Bezirksbehörden oder kommunale Behörden.

12. System nach Anspruch 1, wobei die gesammelten Rohdaten auf Antennen bezogene Leistungsmessdaten, Mikrowellen-Link-Daten und Leistungsfaktor-Daten sowie Konfigurationsdaten umfassen.

13. Softwarebasiertes Verfahren für kontinuierliche Verwaltung und Überwachung von Kernnetzen, Funkzugangsnetzen und Strahlungsquellen in einer zellularen Station, aufweisend die folgenden Schritte:
a. Sammeln von Rohdaten, die bezogen sind auf Strahlungsquellen eines mobilen Netzes, dem ein erweiterter Knoten (106) zugeordnet ist;
b. Zeichnen einer Datei, der die gesammelten Daten zugeordnet sind, unmittelbar nach der Erstellung;
c. durch eine Softwareverarbeitungseinrichtung (204) zum Extrahieren der gesammelten Rohdaten und zum Vergleichen der extrahierten Daten mit den gespeicherten, auf eine nationale Regulierungsbehörde bezogenen Lizenz-Genehmigungs-Daten von einer Strahlungsquelle an einem zellularen Standort; und
d. durch einen Varianz- und Violationsgenerator (208), der die verglichenen Lizenz-Genehmigungs-Daten empfängt und als Reaktion eine Varianz- und Violationsdatei erzeugt, wobei die die Varianz- und Violationsdatei für die Verwaltung und Überwachung von zellularen Kernnetzen, Funkzugangsnetzen und Strahlungsquellen benutzt wird und zum Erkennen von Lizenz-Genehmigungs-Verletzungen und Nichtübereinstimmungen an dem Ort;
**dadurch gekennzeichnet, dass** der Schritt des Sammelns von Rohdaten bezogen auf einen mobilen Betreiber fern und online ausgeführt wird, um auf ein Kernnetz, Funkzugangsnetz und Strahlungsquellen des mobilen Netzes bezogene Rohdaten ohne Operatoreingriff dynamisch zu aktualisieren, wobei die Rohdaten Lizenz-Genehmigungs-Daten und auf Bezirke oder Gemeinden bezogene Baugenehmigungsdaten mit zugeordnetem erweiterten Knoten (106) und zugeordneter AnwenderAusrüstung (107) umfassen,
wobei die Softwareverarbeitungsvorrichtung die Lizenz-Genehmigungs-Daten und Baugenehmigungsdaten von durch Filtern relevanter Parameterwerte von allen Kommunikationsprotokollschichten extrahiert und die
extrahierten Lizenz-Genehmigungs-Daten und Baugenehmigungsdaten online mit den gespeicherten Lizenz-Genehmigungs-Daten beziehungsweise Baugenehmigungsdaten vergleicht,
wobei die Softwareverarbeitungsvorrichtung ein Fernberechnen der Zuteilung von Fußbodenfläche in einem Kommunikationsraum des Ortes durch Bestimmen einer Anzahl von Hardware-Elementen, die im Kommunikationsraum in Anwendung sind, und von Abmessungen von Schränken in der Anzahl von Hardware-Elementen durchführt, und außerdem Daten von einer Antennen-Informationsvorrichtung (402) und einer turmmontierten Verstärker-Informationsvorrichtung (403) fernbezieht, die Quality-of-Service-Parameter zugeordnet ist, welche sich auf die Leistung jedes erweiterten Knotens beziehen,
wobei die Lizenz-Genehmigungs-Daten und Baugenehmigungsdaten aus den fern online gesammelten Daten durch Filtern relevanter Parameterwerte von allen Kommunikationsprotokoll-Schichten extrahiert werden, und wobei die extrahierten Lizenz-Genehmigungs-Daten und Baugenehmigungsdaten online mit den gespeicherten Lizenz-Genehmigungs-Daten beziehungsweise Baugenehmigungs-Daten verglichen werden,
wobei die online verglichenen Lizenz-Genehmigungs-Daten und Baugenehmigungsdaten als Reaktion auf eine online Varianz- und Violationsdatei empfangen werden, die erzeugt wird.

14. Verfahren nach Anspruch 13, ferner aufweisend:
Sammeln von Dateien nahe der Betriebszeit, ohne Eingriff des Operators zum Schutz gegen Fälschung;
Senden der Varianz- und Violationsdatei online innerhalb von Minuten nach Auftreten der Nichtübereinstimmung oder Unzulässigkeit bei einer Regulationsbehörde für Strahlungsquellen, wobei die Datei von der Regulierungsbehörde zum Verwalten und Überwachen des zellularen Kerns und Zugangsnetzes und der Strahlungsquelle benutzt wird; oder
Nutzen von Daten in einer Historik-Datenbank zur Identifikation von Verletzung, anomalen oder illegalen Netzbetriebsmustern und Verhaltensweisen für zukünftige Regulierungsforschung und Konstruktion.

15. Verfahren nach Anspruch 13, ferner aufweisend ein Verifizieren von Operatorberichten durch Vergleichen von auf Lizenzen und Genehmigungen bezogenen Daten von
Anwender-Ausrüstungs-Einheiten (UE) mit auf Lizenzen und Genehmigungen bezogenen Daten von Betreibern vom zellularen Kern, vom Zugangsnetz und von der Strahlungsquelle.

## Revendications

1. Système logiciel (201) pour surveiller continuellement des données de permis de licence provenant d'un ou plusieurs réseaux de coeur, réseaux d'accès radio et sources de rayonnement dans un site cellulaire, comprenant :
a. un serveur de permis d'exploitation (206) dans lequel des données de permis de licence de régulateurs nationaux de sources de rayonnement sont mémorisées ;
b. un serveur de permis de construire (207) dans lequel des données de permis de construire de districts ou de municipalités desdites sources de rayonnement sont mémorisées ;
c. des moyens pour collecter des données brutes relatives à des sources de rayonnement d'un réseau mobile (109) associé à un noeud étendu (106) ;
d. une unité de traitement logiciel (204) pour extraire lesdites données brutes collectées et pour comparer lesdites données extraites aux dites données de permis de licence mémorisées ; et
e. un générateur de variance et de violation (208) pour recevoir lesdites données de permis de licence comparées en provenance de ladite unité de traitement logiciel et pour générer, en réponse, un fichier de données de variance et de violation, dans lequel ledit fichier de variance et de violation est utilisé pour gérer et pour commander un réseau de coeur cellulaire, un réseau d'accès radio et des sources de rayonnement, et pour détecter toute violation et toute non-conformité de permis de licence dans ledit site,
**caractérisé en ce que** lesdits moyens de collecte de données brutes sont des moyens (103, 109, 202, 203, 204) de collecte en ligne à distance auprès d'un opérateur mobile et de mise à jour dynamique de données brutes relatives à un réseau de coeur, un réseau d'accès radio et des sources de rayonnement dudit réseau mobile sans intervention d'opérateur, comprenant des données de permis de licence et des données de permis de construire associées à un noeud étendu (106) et à un équipement utilisateur (107),
dans lequel ladite unité de traitement logiciel est utilisable pour extraire les données de permis de licence en ligne à distance et les données de permis de construire à partir desdites données collectées en ligne à distance en filtrant des valeurs de paramètres pertinentes de toutes les couches de protocole de communication, et pour comparer lesdites données de permis de licence extraites et lesdites données de permis de construire extraites en ligne respectivement aux dites données de permis de licence mémorisées et aux dites données de permis de construire mémorisées,
dans lequel ladite unité de traitement logiciel comprend un générateur de construction (208) pour calculer à distance une allocation d'espace de sol dans une salle de communication dudit site en déterminant un nombre d'éléments matériels à utiliser dans ladite salle de communication et des dimensions d'armoires pour ledit nombre d'éléments matériels, et un ou plusieurs décodeurs pour obtenir à distance des données d'une unité d'informations d'antenne (402) et d'une unité d'informations d'amplificateur montée dans une tour (403) associée à des paramètres de qualité de service relatifs aux performances de chaque noeud étendu,
dans lequel ledit générateur de variance et de violation est également utilisable pour recevoir lesdites données de permis de licence comparées en ligne et lesdites données de permis de construire comparées en ligne en provenance de ladite unité de traitement logiciel, et pour générer, en réponse, un fichier de données de variance et de violation en ligne.

2. Système selon la revendication 1, dans lequel les sources de rayonnement sont des sources de rayonnement non ionisantes de télécommunications radio sans fil.

3. Système selon la revendication 1, dans lequel l'unité de traitement logiciel traite et analyse les paramètres de permis de licence de chaque réseau de coeur cellulaire, de chaque réseau d'accès et de chaque source de rayonnement en fonction des données de rayonnement extraites ; ou
elle traite et analyse les paramètres de permis de licence en temps presque réel, sensiblement en secondes ou en minutes après leur création.

4. Système selon la revendication 1, dans lequel des capacités de surveillance et de mesure de réseaux mobiles multiples à points multiples et à technologies multiples sont activées par l'intermédiaire d'un système de surveillance et de gestion logicielle unique ;
des données spectrales de réseau mobile national gérées par logiciel sont utilisées dans une grande zone géographique ;
des données de permis de construire et d'exploitation de réseau mobile sont mesurées, surveillées et gérées dans un système centralisé ; ou
une mesure réelle est transformée en centres d'évaluation de génie civil virtuels à emplacements multiples.

5. Système selon la revendication 1, dans lequel les fichiers de données sont des fichiers de données XML qui comprennent des messages d'événements en temps réel transférés entre des composants dans le site surveillé.

6. Système selon la revendication 1, dans lequel l'unité de traitement logiciel comprend :
a. un délaceur pour extraire les données de permis de licence des fichiers de données XML ;
b. un vérificateur pour comparer lesdites données de permis de licence aux données de permis de licence de chaque station de base, BS, et de chaque source de rayonnement ; et
c. le générateur de construction pour construire l'élément relatif aux données de permis de licence de chaque BS et de chaque source de rayonnement, sensiblement en temps réel, pour un processus de vérification.

7. Système selon la revendication 6, dans lequel le délaceur logiciel extrait les données d'utilisation de spectre de fréquence, les données de performances de catégorie de données de qualité de service de réseau et les données de génie civil de chaque antenne et de chaque secteur dans le site surveillé ; ou
le délaceur englobe un ou plusieurs décodeurs aptes à analyser en parallèle les fichiers de données reçus des sources de rayonnement.

8. Système selon la revendication 6, dans lequel le vérificateur compare en outre les données de permis de licence du réseau d'accès, du réseau de coeur et des unités d'équipement utilisateur, UE, aux données de permis de licence des sources de rayonnement afin de détecter toute falsification des rapports d'opérateur.

9. Système selon la revendication 1, comprenant en outre un filtre pour filtrer des données privées relatives aux clients d'opérateur à partir des fichiers de données XML ou pour filtrer des données privées relatives aux clients d'opérateur à partir des fichiers de données de configuration de sous-système du réseau.

10. Système selon la revendication 1, comprenant en outre une base de données d'historique contenant des définitions d'enregistrements de données d'historique des données de permis de licence antérieures et des définitions de gestion des violations, des variances et des événements des enregistrements de suivi d'événements.

11. Système selon la revendication 1, dans lequel les permis d'exploitation sont soumis à des réglementations d'autorités de district local ou d'autorités de municipalité.

12. Système selon la revendication 1, dans lequel les données brutes collectées comprennent des données de mesure de puissance relatives aux antennes, des données de liaisons micro-ondes, des données de facteurs de performances et des données de configuration.

13. Procédé logiciel de gestion et de commande en continu de réseaux de coeur cellulaires, de réseaux d'accès radio et de sources de rayonnement dans un site cellulaire, comprenant les étapes de :
a. la collecte de données brutes relatives à des sources de rayonnement d'un réseau mobile (109) associé à un noeud étendu (106) ;
b. la signature d'un fichier associé aux dites données collectées immédiatement après sa création ;
c. par une unité de traitement logiciel (204), l'extraction desdites données brutes collectées et la comparaison desdites données extraites aux dites données de permis de licence de régulateurs nationaux mémorisées d'une source de rayonnement dans un site cellulaire ; et
d. par un générateur de variance et de violation (208), la réception desdites données de permis de licence comparées et la génération, en réponse, d'un fichier de données de variance et de violation, dans lequel ledit fichier de variance et de violation est utilisé pour gérer et pour commander un réseau de coeur cellulaire, un réseau d'accès radio et des sources de rayonnement, et pour détecter toute violation et toute non-conformité de permis de licence dans ledit site,
**caractérisé en ce que** l'étape de collecte de données brutes est effectuée à distance et en ligne auprès d'un opérateur mobile pour effectuer une mise à jour dynamique de données brutes relatives à un réseau de coeur, un réseau d'accès radio et des sources de rayonnement dudit réseau mobile sans intervention d'opérateur, lesdites données brutes comprenant des données de permis de licence et des données de permis de construire de district ou de municipalité associées à un noeud étendu (106) et à un équipement utilisateur (107),
dans lequel ladite unité de traitement logiciel extrait les données de permis de licence et les données de permis de construire à partir desdites données collectées en ligne à distance en filtrant des valeurs de paramètres pertinentes de toutes les couches de protocole de communication, et compare lesdites données de permis de licence extraites et lesdites données de permis de construire extraites en ligne respectivement à des données de permis de licence mémorisées et à des données de permis de construire mémorisées,
dans lequel ladite unité de traitement logiciel calcule à distance une allocation d'espace de sol dans une salle de communication dudit site en déterminant un nombre d'éléments matériels à utiliser dans ladite salle de communication et des dimensions d'armoires pour ledit nombre d'éléments matériels, et obtient également à distance des données d'une unité d'informations d'antenne (402) et d'une unité d'informations d'amplificateur montée dans une tour (403) associée à des paramètres de qualité de service relatifs aux performances de chaque noeud étendu,
dans lequel lesdites données de permis de licence et lesdites données de permis de construire sont extraites à partir desdites données collectées en ligne à distance en filtrant des valeurs de paramètres pertinentes de toutes les couches de protocole de communication, et lesdites données de permis de licence extraites et lesdites données de permis de construire extraites sont comparées en ligne respectivement aux dites données de permis de licence mémorisées et aux dites données de permis de construire mémorisées,
dans lequel lesdites données de permis de licence comparées en ligne et lesdites données de permis de construire comparées en ligne sont reçues en réponse à un fichier de données de variance et de violation en ligne qui est généré.

14. Procédé selon la revendication 13, comprenant en outre
la collecte des fichiers de données à proximité du temps opérationnel sans intervention d'opérateur pour la protection contre toute falsification ;
l'envoi en ligne du fichier de données de violation et de variance dans les minutes qui suivent une non-conformité ou un événement illicite à un régulateur de sources de rayonnement, dans lequel ledit fichier est utilisé par le régulateur pour gérer et commander ledit réseau de coeur cellulaire, ledit réseau d'accès et lesdites sources de rayonnement ;
l'utilisation de données dans une base de données d'historique pour identifier des violations, des événements anormaux, des profils opérationnels illicites de réseau mobile et des comportements pour la recherche et l'élaboration de réglementations futures.

15. Procédé selon la revendication 13, comprenant en outre la vérification des rapports d'opérateur en comparant des données de permis de licence d'unités d'équipement utilisateur, UE, à des données de permis de licence d'opérateurs de réseau de coeur cellulaire, de réseau d'accès et de sources de rayonnement.
